(19) Europäisches Patentamt
European Patent Office
Office européen des brevets

(11) Publication number: **0 431 980 B1**

(12) # EUROPEAN PATENT SPECIFICATION

(45) Date of publication of patent specification: **02.08.95**

(51) Int. Cl.[6]: **C08G 77/08**

(21) Application number: **90313360.1**

(22) Date of filing: **07.12.90**

(54) **Preparation of high molecular weight organo-polysiloxane.**

(30) Priority: **07.12.89 JP 318626/89**

(43) Date of publication of application:
**12.06.91 Bulletin 91/24**

(45) Publication of the grant of the patent:
**02.08.95 Bulletin 95/31**

(84) Designated Contracting States:
**DE FR GB**

(56) References cited:
**EP-A- 0 119 092**
**EP-A- 0 133 975**
**FR-A- 1 275 384**
**US-A- 3 032 530**
**US-A- 3 812 081**

**PATENT ABSTRACTS OF JAPAN, vol. 10, no. 136 (C-347)(2193) 20 May 1986 ; & JP-A- 60 262 826**

**W. Noll: "Chemie und Technologie der Silicone", Verlag Chemie 1968, page 181**

(73) Proprietor: **SHIN-ETSU CHEMICAL CO., LTD.**
**6-1, Ohtemachi 2-chome**
**Chiyoda-ku**
**Tokyo (JP)**

(72) Inventor: **Sato, Shinichi**
**3-5-5, Isobe**
**Annaka-shi,**
**Gunma-ken (JP)**
Inventor: **Matsuda, Takashi**
**3-13-37, Isobe**
**Annaka-shi,**
**Gunma-ken (JP)**
Inventor: **Takago, Toshio**
**94-7, Yanase**
**Annaka-shi,**
**Gunma-ken (JP)**

(74) Representative: **Votier, Sidney David et al**
**CARPMAELS & RANSFORD**
**43, Bloomsbury Square**
**London WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 431 980 B1

## Description

### BACKGROUND OF THE INVENTION

#### 1. Field of the Invention

This invention relates to a process for preparing a high molecular weight organopolysiloxane by use of a hydroxyl-containing organosiloxane as a starting material.

#### 2. Description of the Prior Art

Methods of lengthening the molecular chain of hydroxyl-containing organosiloxanes by use of various silane compounds have been known.

For instance, U.S. Pat. No. 3,776,934 discloses a method in which methylvinylbis(N-methylacetamido)-silane is reacted with an organopolysiloxane blocked by hydroxyl group at both ends thereof to form a silicone elastomer composition which is curable at room temperature.

Also, Japanese Patent Publication No. 55-49623 (1980) discloses a method of obtaining a hydroxyl-containing organosiloxane with an increased molecular weight by mixing a hydroxyl-containing organosiloxane with methylvinylbis(ε-caprolactamo)silane.

Furthermore, Japanese Patent Publication No. 61-12932 (1986) discloses a method in which a hydroxyl-containing organosiloxane, a cyclosiloxane having two vinyloxy groups bonded thereto and a guanidine derivative are mixed together to form a hydroxyl-containing organosiloxane with an increased molecular weight.

According to the above methods of the prior art, however, an amide or caprolactam having toxicity or odor is by-produced or there is need to use a cyclosiloxane which is difficult to synthesize. Therefore, the methods of the prior art are not so high in practicability.

FR-A-1 275 384 discloses the preparation of organopolysiloxanes in the presence of fluor containing carboxylic acids such as trifluoroacetic acid.

### SUMMARY OF THE INVENTION

Accordingly, it is an object of this invention to provide a process for preparing a high molecular weight organopolysiloxane by which the drawbacks of the prior art as mentioned above are overcome and which is extremely high in practicability.

According to this invention, there is provided a process for preparing a high molecular weight organopolysiloxane which comprises subjecting an organosiloxane having at least one Si-bonded hydroxyl group in one molecule thereof to a condensation reaction in the presence of at least one acidic compound selected from the group consisting of

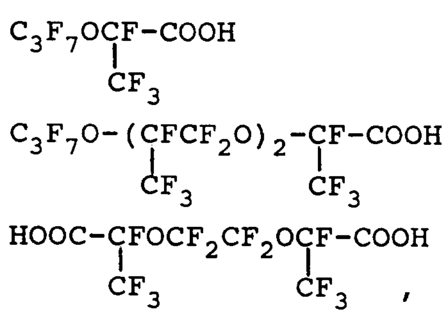

and ,

in an amount of 0.001 to 10 parts by weight per 100 parts by weight of the organosiloxane.

That is, in the process of this invention, a dehydration condensation reaction represented by the following formula:

$$\equiv Si\text{-}OH + HO\text{-}Si\equiv \rightarrow \equiv Si\text{-}O\text{-}Si\equiv + H_2O$$

proceeds in the presence of the aforementioned acidic compound as a catalyst, whereby the molecular chain of the organosiloxane is lengthened, resulting in the formation of an organopolysiloxane with an

increased molecular weight.

According to the process of this invention, the acidic compound used as a catalyst can be removed easily, and it is possible to control, as desired, the viscosity (equivalent or corresponding to molecular weight) of the intended hydroxyl-containing organopolysiloxane by regulating the reaction time or the reaction temperature.

In the process of the invention, furthermore, compounds having toxicity or odor are neither used nor by-produced. Therefore, the process is extremely high in practicability.

## DETAILED DESCRIPTION OF THE INVENTION

### Hydroxyl-containing organosiloxane

As the starting material in this invention, an organosiloxane having at least one Si-bonded hydroxyl group in one molecule thereof is used.

The organosiloxane is not particularly limited in structure, so far as it has at least one hydroxyl group as mentioned above and the aforementioned dehydration condensation reaction is performed effectively. For instance, the organosiloxane may be a homopolymer or a copolymer, and may also be a mixture of various polymers. Further, the structural unit of the organosiloxane may be a monoorganosiloxane unit, a diorganosiloxane unit, a triorganosiloxy unit or a combination of these units. Organic groups bonded to silicon atoms may be any of monovalent hydrocarbon groups, monovalent halogenated hydrocarbon groups and monovalent cyanohydrocarbon groups. Generally, the monovalent hydrocarbon groups which can be used include, for example, methyl, ethyl, propyl, hexyl, octadecyl, vinyl, allyl, cyclohexyl, cyclohexenyl, or phenyl, whereas the monovalent halogenated hydrocarbon groups usable include, for example, chloromethyl, 3-chloropropyl, 3,3,3-trifluoropropyl, α,α,α-trifluorotolyl, chlorobenzyl, or bromopropyl, and the monovalent cyanohydrocarbon groups usable include, for example, cyanoethyl or cyanopropyl. Of these groups, particularly preferred for use in this invention are methyl, vinyl, phenyl, and 3,3,3-trifluoropropyl.

In this invention, furthermore, it is desirable that the Si-bonded hydroxyl group is present at an end of the molecular chain of the organosiloxane, and it is particularly preferable that the organosiloxane is blocked by hydroxyl group at both ends of the molecular chain thereof, in view of rapid progress of the dehydration condensation reaction.

### Acidic compound

The acidic compound to be mixed with the hydroxylcontaining organosiloxane in this invention has a pKa value at 20 °C of not more than 3, and is

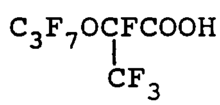 (0.20),

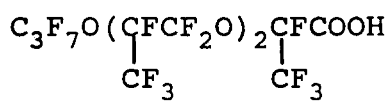 (0.20)

or

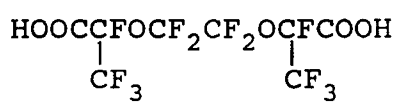 (0.20)

The parenthesised numerical values represent the pKa at 20 °C of the relevant acidic compound.

These compounds may be used singly or in combinatin of two or more.

As contrasted to the above, the pKa of acetic acid at 20 °C is 4.56. If acetic acid with pKa of 4.56 is used, as for instance shown in the example below, the dehydration condensation reaction between the molecules of the hydroxyl-containing organosiloxane does not proceed effectively, and it is difficult to achieve formation of an organopolysiloxane with an increased molecular weight.

The acidic compound as mentioned above is used in an amount of 0.001 to 10 parts by weight, preferably 0.1 to 1.0 part by weight, per 100 parts by weight of the hydroxyl-containing organosiloxane. If the amount of the acidic compound used is less than 0.001 part by weight, the intended dehydration

condensation reaction progresses little. On the other hand, use of the acidic compound in an amount of more than 10 parts by weight does not produces any additional effect and is, rather, disadvantageous on an economical basis.

Dehydration condensation reaction

In this invention, the dehydration condensation reaction between the molecules of the hydroxyl-containing organosiloxane is caused to proceed rapidly by heating or maintaining the mixture of the organosiloxane with the acidic compound to or at a temperature of 20 to 100 °C, preferably 20 to 80 °C. If the temperature is below 20 °C, the reaction rate is so low that the practicability is spoiled. If the temperature is above 100 °C, on the other hand, a siloxane chain cutting reaction occurs with the undesirable result of formation of lower molecular weight siloxane.

The reaction generally takes place without addition of solvent, but a solvent may be used, as required. However, most uses of the organopolysiloxane obtained according to the process of this invention do not require the use of solvent, and, accordingly, it is desirable to use no solvent in the process, thereby avoiding waste of energy and loss of time in removal of solvent.

The reaction is carried out for a time ranging generally from several hours to one day, whereby an organopolysiloxane with the desired viscosity (molecular weight) can be obtained. The control of the reaction time, or the termination of the reaction, can be achieved easily by various methods. For example, where the starting material is a low boiling point compound, this purpose can be accomplished by distilling off the compound under a reduced pressure. Where the starting material is a high boiling point compound which is difficult to distill off under a reduced pressure, the purpose can be accomplished by adding a diluted alkali such as sodium carbonate, etc. to the reaction system, and agitating the reaction system to neutralize the acidic compound, followed by filtration.

After the reaction is finished, distillation under a reduced pressure is carried out to remove the acidic compound and by-produced water, whereby an organopolysiloxane with an increased molecular weight is obtained.

EXAMPLES

Examples 1 to 4 (Examples 1 and 2 are for comparison).

Admixtures of 100.0 g of a dimethylpolysiloxane blocked by hydroxyl group at both ends of its molecular chain and having a viscosity at 25 °C of 760 cSt ($mm^2s^{-1}$) with 0.0015 mol each of the respective acidic compounds set forth in Table 1 were left to stand at 20 °C. As a result, the respective reaction products exhibited variations in viscosity with time, as shown in Table 1.

The values of viscosity shown in Table 1, and in the subsequent tables, are all in centistokes (cSt) ($mm^2s^{-1}$).

Table 1

| Examples | 1 | 2 | 3 | 4 |
|---|---|---|---|---|
| Acidic compound | $C_3F_7COOH$ | $C_8F_{17}COOH$ | $Rf^2COOH$ 1) | $Rf^4COOH$ 2) |
| Reaction time (hr) | | | | |
| 0 | 760 | 760 | 760 | 760 |
| 1 | 860 | 790 | 840 | 830 |
| 2 | 1,080 | 820 | 1,030 | 1,080 |
| 5 | 1,580 | 1,420 | 1,800 | 1,970 |
| 21 | 24,800 | 3,200 | 21,400 | 47,500 |
| 29 | 45,400 | 8,120 | 155,000 | 94,600 |
| 45 | 200,000 | 28,000 | 2,000,000 | 790,000 |

1) $Rf^2COOH$ : $C_3F_7OCFCOOH$
| 
$CF_3$ (on the CF)

2) $Rf^4COOH$ : $C_3F_7O(CFCF_2O)_2CFCOOH$
|    |
$CF_3$    $CF_3$

Examples 5 to 8

Admixtures of 100.0 g of a dimethylpolysiloxane blocked by hydroxyl group at both ends of its molecular chain and having a viscosity at 25 °C of 760 cSt ($mm^2s^{-1}$) with 0.1 g, 0.5 g, 1.0 g and 3.0 g, respectively, of a fluorine-containing carboxylic acid represented by the formula:

$C_3F_7OCFCOOH$
|
$CF_3$

were left to stand at 20 °C. As a result, the reaction products exhibited variations in viscosity with time, as shown in Table 2.

Table 2

| Examples | 5 | 6 | 7 | 8 |
|---|---|---|---|---|
| Amount of added $Rf^2COOH$ [1)] (g) | 0.1 | 0.5 | 1.0 | 3. 0 |
| Reaction time (hr) | | | | |
| 0 | 760 | 780 | 760 | 760 |
| 1 | 920 | 1,190 | 1,650 | 1,720 |
| 4 | 1,070 | 2,110 | 5,620 | 5,430 |
| 20 | 3,430 | 43,000 | 290,000 | 270,000 |
| 28 | 5,280 | 85,000 | 390,000 | 450,000 |
| 45 | 15,200 | 780,000 | 2,000,000 | 3,000,000 |

1) $Rf^2COOH$ : $C_3F_7OCFCOOH$
|
$CF_3$

Examples 9 to 11

Admixtures of 100.0 g each of dimethylorganopolysiloxanes blocked by hydroxyl group at both ends of the molecular chain thereof and having respective viscosities at 25 ° C as shown in Table 3 with 0.5 g of a fluorine-containing carboxylic acid represented by the formula:

$C_3F_7OCFCOOH$
|
$CF_3$

were left to stand at 20 ° C. Consequently, the reaction products exhibited variations in viscosity with time, as shown in Table 3.

Table 3

| Examples | 9 | 10 | 11 |
|---|---|---|---|
| Diorganopolysiloxane blocked by hydroxyl group at both ends | Dimethyl-polysiloxane | 3,3,3-Trifluoro-propylmethyl-polysiloxane | Compound indicated below (*) |
| Reaction time (hr) | | | |
| 0 | 760 | 62,000 | 8,500 |
| 1 | 1,190 | 72,400 | 9,300 |
| 4 | 2,110 | 80,900 | 36,000 |
| 20 | 43,000 | 111,000 | 320,000 |
| 28 | 85,000 | 156,000 | 485,000 |
| 45 | 780,000 | 450,000 | 2,000,000 |

(*)

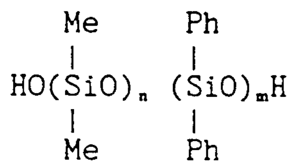

wherein Me is the methyl group, Ph is the phenyl group, and n and m are each a positive integer.

<u>Examples 12 to 15, for Comparison</u>

Admixtures of 100.0 g of a dimethylpolysiloxane blocked by hydroxyl group at both ends of its molecular chain and having a viscosity at 25 ° C of 760 cSt ($mm^2s^{-1}$) with 0.0015 mol each of the respective acidic compounds set forth in Table 4 were left to stand at 25 ° C. As a result, the respective reaction products exhibited variations in viscosity with time, as shown in Table 4.

Table 4

| Examples | | 12 | 13 | 14 | 15 |
|---|---|---|---|---|---|
| Acidic | Kind | $ClCH_2COOH$ | $Cl_2CHCOOH$ | $NCCH_3COOH$ | $CH_3COOH$ |
| compound | pKa(20°C ) | 2.68 | 1.30 | 2.47 | 4.56 |
| Reaction time (hr) | | | | | |
| | 0 | 760 | 760 | 760 | 760 |
| | 1 | 810 | 920 | 840 | 730 |
| | 2 | 920 | 1,150 | 1,030 | 750 |
| | 5 | 1,010 | 1,520 | 1,280 | 800 |
| | 21 | 3,200 | 9,200 | 5,600 | 790 |
| | 29 | 5,400 | 18,600 | 8,500 | 790 |
| | 45 | 10,200 | 38,000 | 15,300 | 810 |

## Claims

1. A process for preparing a high molecular weight organopolysiloxane, which comprises subjecting an organosiloxane having at least one Si-bonded hydroxyl group in one molecule thereof to a condensation reaction in the presence of at least one acidic compound selected from the group consisting of

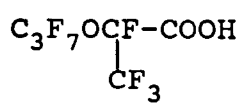

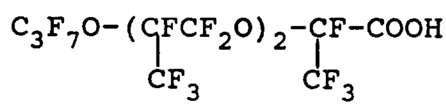

and

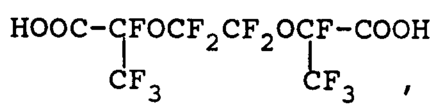

,

in an amount of 0.001 to 10 parts by weight per 100 parts by weight of the organosiloxane.

2. A process according to claim 1, wherein the acidic compound is used in an amount of 0.1 to 1.0 part by weight per 100 parts by weight of the hydroxyl-containing organosiloxane.

3. A process according to claim 1 or 2, wherein the condensation reaction is carried out at a temperature of 20 to 100 °C.

4. A process according to claim 3, wherein the condensation reaction is stopped by addition of diluted alkali to the reaction system.

## Patentansprüche

1. Verfahren zur Herstellung eines Organopolysiloxans mit hohem Molekulargewicht, bei welchem ein Organosiloxan mit mindestens einer Si-gebundenen Hydroxylgruppe in einem Molekül davon einer Kondensationsreaktion in der Gegenwart von mindestens einer sauren Verbindung unterworfen wird, welche Verbindung aus der Gruppe bestehend aus

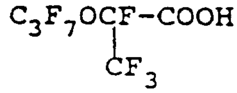

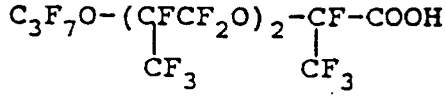

und

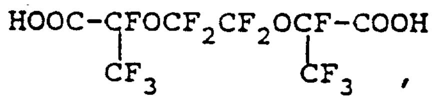

in einer Menge von 0,001 bis 10 Gewichtsteile pro 100 Gewichtsteile des Organosiloxans gewählt ist.

2. Verfahren nach Anspruch 1, wobei die saure Verbindung in einer Menge von 0,1 bis 1,0 Gewichtsteile pro 100 Gewichtsteile des Hydroxyl-enthaltenden Organosiloxans verwendet wird.

3. Verfahren nach Anspruch 1 oder 2, wobei die Kondensationsreaktion bei einer Temperatur von 20 bis 100 ° C ausgeführt wird.

4. Verfahren nach Anspruch 3, wobei die Kondensationsreaktion durch Zugabe von verdünntem Alkali zum Reaktionssystem gestoppt wird.

**Revendications**

1. Procédé pour préparer un organopolysiloxane de masse moléculaire élevée, qui consiste à soumettre un organosiloxane ayant au moins un groupe hydroxyle lié à un atome Si dans une molécule de celui-ci à une réaction de condensation en présence d'au moins un composé acide choisi dans le groupe formé par:

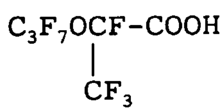

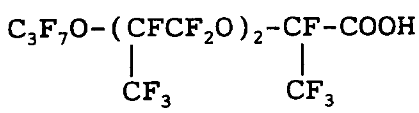

et

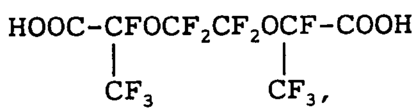

à raison de 0,001 à 10 parties en poids pour 100 parties en poids de l'organosiloxane.

2. Procédé selon la revendication 1, dans lequel le composé acide est utilisé à raison de 0,1 à 1,0 partie en poids pour 100 parties en poids de l'organosiloxane contenant un groupe hydroxyle.

3. Procédé selon la revendication 1 ou 2, dans lequel la réaction de condensation est effectuée à une température de 20 à 100 ° C.

4. Procédé selon la revendication 3, dans lequel la réaction de condensation est arrêtée par l'addition d'une base diluée au système réactionnel.